# EUROPEAN PATENT SPECIFICATION

(11) **EP 0 716 043 B1**
(45) Date of publication and mention of the grant of the patent: **27.07.2005**
(21) Application number: 95203327.2
(22) Date of filing: 08.12.1995
(51) Int. Cl.: B67D 5/54, B67D 5/32, A01J 7/04, A01J 5/017, A01J 5/013

(54) **An implement for automatically milking animals, such as cows,comprising a pressure vessel**
Vorrichtung zum automatischen Melken von Tieren, wie zum Beispiel Kühen, versehen mit einem Druckbehälter
Dispositif de traire automatique d'animaux, par exemple des vaches, pourvu d'un récipient pressurisable

(30) Priority: 09.12.1994 NL 9402077
(43) Date of publication of application: 12.06.1996
(73) Proprietor: MAASLAND N.V., 3147 PA Maassluis (NL)
(72) Inventor: Van den Berg, Karel, NL-2971 BR Bleskensgraaf (NL); Richard, Xavier, F-53470 Commer (FR)
(74) Representative: Corten, Maurice Jean F.M.

(56) References cited:
- DE-U- 9 016 677
- US-A- 2 520 175
- US-A- 4 403 569

## Description

The invention relates to an implement for milking animals in which is arranged a pressure vessel according to the preamble of claim 1.

Such an implement is known from US-A-4,403,569.

It is an object of the present invention to provide an implement for milking animals which is simpler and safer to operate.

According to the invention this is achieved by an implement for milking animals of the sort as defined above comprising the characterizing features of claim 1. By means of the valve associated with the filling opening this opening is closed off automatically at the moment when the pressure vessel is pressurized from the pressurized air or gas line. Conversely when the pressure in the pressure vessel is removed the valve is automatically released. Thus by opening the exit with the further valve, the filling opening is enabled, whereafter the operating person can pour fluid into the pressure vessel; then, the filling opening is closed off automatically at the moment that the pressure vessel is pressurized again when connected to the pressurized air or gas line by means of the further valve.

According to a particular embodiment of the invention the valve is designed as a non-return valve. When, upon application of such a non-return valve, the pressure in the pressure vessel is removed and fluid is poured onto the non-return valve, the weight of the fluid ensures that the non-return valve is pushed aside and the filling opening is released. In this manner, there is obtained a filling opening that is simple, cheap, and automatically closable. In a preferred particular embodiment of the invention, the non-return valve is designed as a rubber disc, which is suspended pivotable from one point and, in its closed-off position, is supported against a rubber ring disposed around the filling opening of the pressure vessel, at the inside thereof.

For the purpose of simplifying the filling of the pressure vessel with fluid, according to a further particular embodiment, there is disposed above the valve a filling funnel which, at its upper side, is provided with a closing cover. After the pressure vessel has been filled, the closing cover prevents the funnel from being contaminated.

According to another particular embodiment, in the discharge line there is incorporated a filter element, by means of which particles possibly remained behind in the fluid can be filtered out. According to again another particular embodiment, the valve is disposed at or near the upper side of the pressure vessel.

In accordance with a further particular embodiment, for the purpose of determining the quantity of fluid in the pressure vessel, the latter is provided with a liquid level meter. Preferably the liquid level meter is designed as a transparent tube disposed at the outside of the pressure vessel and extending substantially along the height thereof, which tube, at its upper and lower ends, is in connection with the pressure vessel. The liquid column visible in the transparent tube corresponds to the level of the fluid in the pressure vessel and, in this manner, constitutes a simple but efficient indication as to the liquid level therein. According to a further particular embodiment, in particular when the pressure vessel is applied in an automated system including a computer, the liquid level meter is provided with a liquid level sensor supplying a signal when the level of the fluid in the pressure vessel decreases below a fixed, possibly adjustable, minimum value. By means of an auditive or visual signal, there can be pointed out to an operating person that the pressure vessel has to be replenished.

According to a further particular embodiment the pressurized air or gas line is connected to the already present pneumatic system of a milking robot. According to another particular embodiment, the pressure vessel is provided on the robot arm construction of the milking robot and in particular the robot arm construction is movable in the longitudinal direction of the milking parlour.

For a better understanding of the invention and to show how the same may be carried into effect, reference will now be made, by way of example, to the accompanying drawings, in which:
Figure 1 shows, in a side view, an implement for automatically milking animals according to the invention, showing the after-treating device in which the pressure vessel is located;
Figure 2 shows, in a plan view, part of the implement shown in Figure 1, and
Figure 3 shows schematically an arrangement of the pressure vessel as is applied in the implement for automatically milking animals according to Figures 1 and 2.

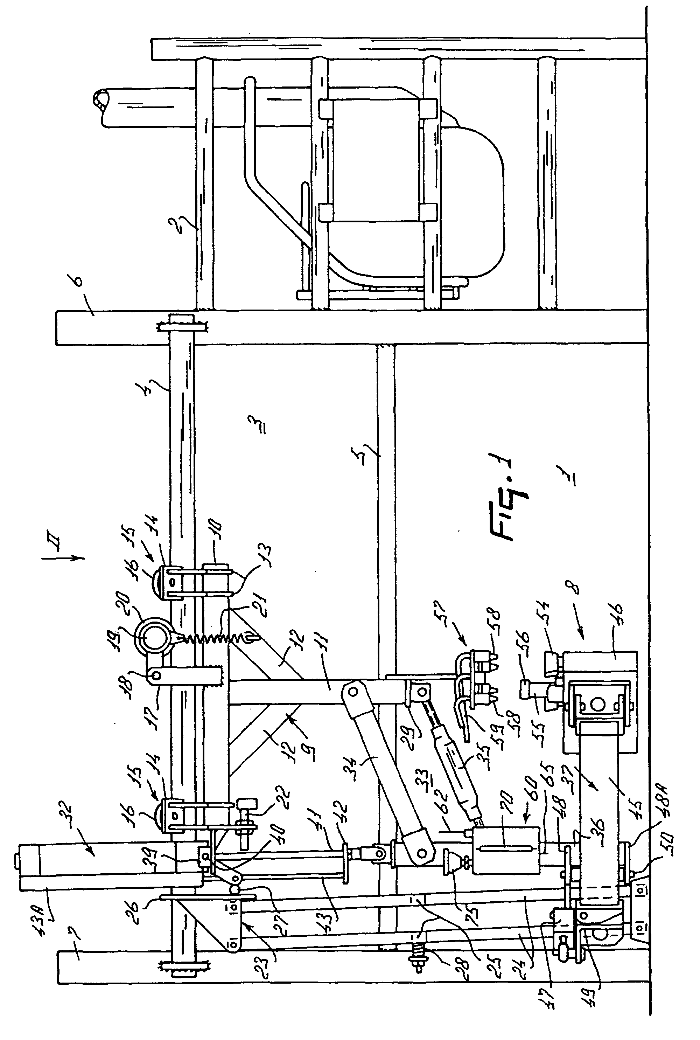

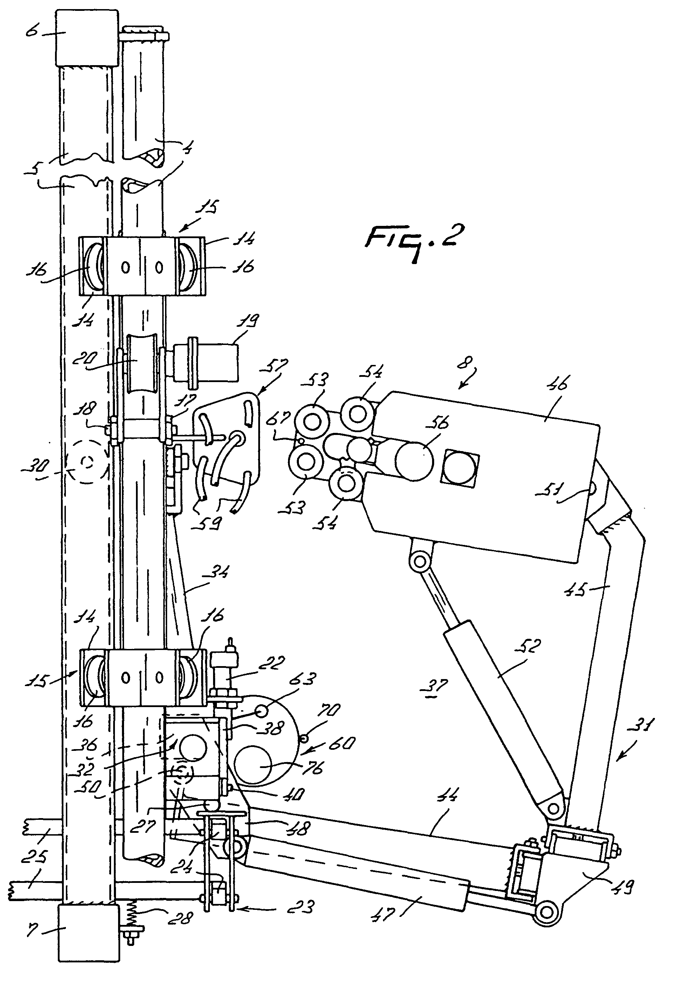

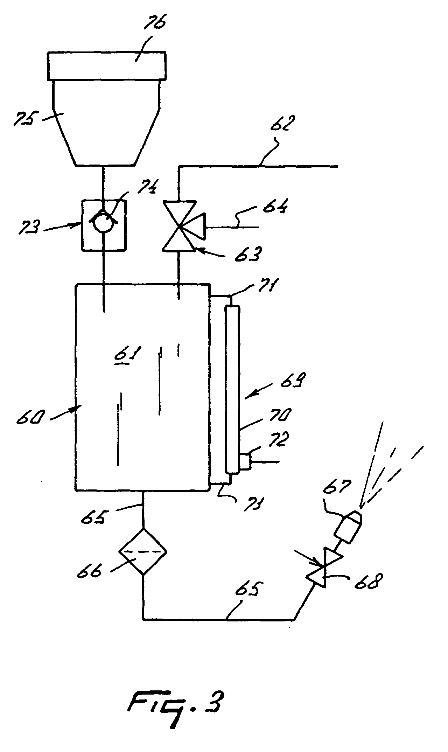

The implement as is shown in Figures 1 and 2 comprises a milking parlour 1 surrounded by a fencing 2 allowing the animal a limited freedom of movement. The animal can enter the milking parlour via a longitudinal side near the rear thereof and leave same via the same longitudinal side near the front thereof. The front side of the milking parlour being provided with a feeding installation, the cow will advance sufficiently far and will come into a position in which it can be milked easily. At the other longitudinal side of the milking parlour, being opposite to the one including the entrance and the exit, there is provided a fixed frame 3 constituting part of the fencing 2, which frame 3 includes a first frame part 4 and a second frame part 5. The first frame part 4 extends parallel to the second frame part 5 and is situated substantially thereabove. The first frame part 4 is fixed to the outside of two vertical stands 6 and 7 constituting part of the fencing 2, while the second frame part 5 is fixed therebetween. To the first frame part 4, there is movably attached a milking robot 8 for automatically milking animals, while this milking robot is supported against the second frame part 5 disposed at such a height that the arms of the milking robot 8 are movable therebelow under the cow present in the milking parlour. The milking robot 8 comprises a carrier frame 9 for its further parts. By designing the upper frame part 4 as a rail, the carrier frame 9, and consequently the entire milking robot 8, can easily be moved along this frame part. The carrier frame 9 includes a beam 10 extending substantially parallel to the first frame part 4, a beam 11 directed vertically downwardly substantially perpendicular to the beam 10 and fixed thereto, and two struts 12. Near the ends of the beam 10, there are provided pairs of supporting elements 13. To each pair of supporting elements 13, by means of supporting plates 14 fixed thereto, at an angle of approximately 45° there are provided two rollers 16, constituting a rollers pair 15, in such a way that the carrier frame 9 is suspended easily movably along the upper frame part 4, therebelow. On the beam 10 of the carrier frame 9, on both sides, there are provided two carriers 17, to which there is attached a motor 19 movable about a pivot shaft 18. By this motor 19 there is driven a roller 20, preferably having a rubber surface, which roller is pushed against the upper frame part 4 by means of a spring member 21. The spring member 21 being active between the motor 19 and the carrier frame 9, the roller 20 to be driven by the motor 19 is kept pushed against the upper frame part 4, so that, when the motor is driven, it will be moved along the upper frame part 4 and, consequently, the entire carrier frame 9 will be moved. To the supporting member 13 which, relative to the milking parlour, is situated rearmost, there is attached a sensor 22 comprising e.g. a laser. By means of this sensor 22, it is possible to guide the milking robot, in the longitudinal direction of the milking parlour, from an inoperative position to a starting position, in which the milking robot arms are moved under the animal present in the milking parlour, and to follow the movements of the animal in the longitudinal direction thereof. For that purpose, the sensor 22 cooperates with a supporting member 23 which is movable against the rear side of the animal. By means of a rod system which, in the preferred embodiment, is constituted by a quadrangle construction and, in particular, by a parallelogram construction 24, this supporting member 23 is arranged on the milking parlour floor pivotably relative thereto. By means of two rods 25, the supporting member 23 is provided with a sidewardly outside the frame parts 4, 5 extending plate 26, which is arranged so as to be able to reflect a signal supplied by the sensor 22. After the sensor 22 has picked up the reflected signal, it will supply a control signal which is a measure for the actual, i.e. measured, distance between the plate 26 and the sensor 22, by means of which control signal the motor 19 can be operated, while the milking robot 8 is guided in the longitudinal direction of the milking parlour in such a way that the distance between the plate 26 and the sensor 22 is brought, respectively maintained, at an adjusted value. In its inoperative position, the milking robot 8 has been moved as rearwardly as possible relative to the frame parts 4 and 5, while pressing, by means of a contact element 27, against the plate 26 and thus keeping the supporting member 23 in its rearmost position. In other words, the supporting member 23 is locked by the milking robot 8 when the latter is in its inoperative position. When, in the longitudinal direction of the milking parlour, the milking robot is guided from this inoperative position to the starting position, in which its arms are moved under the animal present in the milking parlour, then the supporting member 23 is dislocked and, by means of a spring disposed between the parallelogram construction 24 and the fencing 2, is pushed under spring pressure against the rear side of the relevant animal. Upon a forward or backward movement of the cow, under pressure of the spring 28, the supporting member 23 will always be kept against the rear side of the animal, so that the position of the plate 26 determines that of the animal in the longitudinal direction of the milking parlour and, by means of the sensor 22, while maintaining the distance in longitudinal direction between the plate 26 and the sensor 22, the milking robot can follow the movements of the cow in the longitudinal direction of the milking parlour. In the preferred embodiment, the beam 11 of the carrier frame 9 extends vertically downwards to somewhat below the second frame part 5. At the lower side of this beam 11, there is disposed a horizontal, rearwardly extending strip 29 which is provided with a freely rotatable roller element 30. The lower frame part 5 is constituted by a rail, in particular one designed as a U-shaped beam, while the freely rotatable roller element 30 is arranged in such a way that it is movable between the two upright edges of the U-shaped beam. In this manner, the milking robot 8 is supported against the lower frame part 5 and, when being moved by means of the motor over the first frame part 4, can easily move along the second frame part 5. Besides the carrier frame 9, the milking robot comprises a robot arm installation 31 which, by means of a control cylinder 32, is movable substantially vertically relative to the carrier frame 9. By means of a quadrangle construction 33, the robot arm installation 31 is movably connected with the carrier frame 9. In the embodiment shown, the upper arm 34 of this quadrangle construction 33 has a fixed length, while the lower arm 35 thereof is adjustable in length so as to enable the robot arm installation 31 to be adjusted to a limited extent. The robot arm installation 31 comprises a substantially vertical robot arm 36 as well as robot arms 37 that are movable in a substantially horizontal plane. By means of the quadrangle construction 33, the robot arm 36 is connected with the beam 11 of the carrier frame 9. The control cylinder 32 is active between the carrier frame 9 and the robot arm 36. As, by means of the lower arm 35 of the quadrangle construction 33, the orientation of the robot arm 36 is slightly adjustable, the spatial position of the action point of the control cylinder 32 at the robot arm 36 is not entirely fixed. For that reason, the housing of the control cylinder 32 is provided, at least pivotably to a limited extent, on a carrier plate 38 attached to the beam 10 of the carrier frame 9. On this carrier plate 38 there are disposed supports 39, wherebetween the housing of the control cylinder 32 is capable of being moved about a pivot shaft 40. In the preferred embodiment, the control cylinder 32 is designed as a servo-pneumatic positioning cylinder. This means that, at the lower end of the piston rod 41, by means of a plate 42 fixed thereto, there is attached a position feedback rod 43, by means of which, in a part 43A of the control cylinder, a potentiometer will deduce a signal indicating the position of the piston rod relative to the cylinder housing, while, with the aid of the signal supplied by the potentiometer, the position of the piston rod 41 relative to the cylinder housing can be post-guided to a preset position. Furthermore, the control cylinder 32 is provided with an overload protection enabling the robot arm installation 31 to be moved into its lowest position, as soon as the animal present in the milking parlour exercises a pressure thereon, e.g. by kicking. Figure 2 shows the milking robot 8 in its inoperative position, in which it has been moved as rearwardly as possible relative to the frame parts 4, 5 and the robot arm installation 31 has been brought nearest possible to the soil. When a cow is present in the milking parlour and the milking process is to be started, the milking robot 8 is brought from its inoperative position into the starting position, i.e. into the position wherein the arms of the milking robot 8 can be moved to under the cow.

In the preferred embodiment, for that purpose, the milking robot includes arms 44, 45 and 46. The arms 44 and 45 are arranged at a fixed angle of 90° relative to each other. Therefore, the arms 44 and 45 are moved together, i.e. by a control cylinder 47 provided between a supporting plate 48 attached to the robot arm 36 and a connecting piece 49 disposed between the two robot arms 44 and 45. The latter arms are pivotal about a substantially vertical pivot shaft 50 between the supporting plate 48 and a supporting plate 48A, which latter is also rigidly connected to the robot arm 36, more in particular at the lower end thereof. The arm 46 is pivotal relative to the arm 45 about a substantially vertical pivot shaft 51 and is pivoted with respect thereto by means of a control cylinder 52 disposed between the arm 46 and that end of the arm 45 that is situated near the connecting piece 49. Near the end of the arm 46 there are provided the teat cups 53 and 54 to be connected to the teats of a cow. Between the two teat cups 54 there is disposed a slide, which is movable along the arm 46 and on which there is present a sensor 55, which by a sectorwise scanning movement can accurately determine the position of the teats, so that the control cylinders 32, 47 and 52 can be computer-controlled in such a way that the teat cups will be connected properly to the teats. The robot arms 44 - 46 having been brought to under the cow, they are in a relatively low position, in which the sensor 55 will not yet detect teats. By means of the control cylinder 32, the robot arms 44 - 46 are raised stepwise until the sensor 55 detects one or more teats of the animal. When, during this upward movement, the robot arms 44 - 46 should have been raised to such a height that the upper side of the sensor 55 pushes against the cow's abdomen, then, by means of a switch 56 provided on the upper side of the sensor 55, a downward movement of the robot arms is effected, whereafter, by means of the sensor 55, while again stepwise raising the robot arms, the determination of the position of the teats can be repeated.

For the purpose of rinsing the teat cups 53 and 54, the above-described implement is furthermore provided with a rinsing device 57, which is fixed to the downwardly extending beam 11. The rinsing device 57 comprises four downwardly directed spray nozzles 58 connected to rinsing fluid supply lines 59. Via a (non-shown) pump, the rinsing fluid supply lines 59 may be connected to a (non-shown) rinsing fluid reservoir.

When the milking robot is not operative for the purpose of milking, which situation is represented in Figure 1, then the teat cups 53 and 54 are situated straight under the spray nozzles 58, so that, only by moving the robot arm with the teat cups upwardly, the latter are connected to the relative spray nozzles 58. Figure 2 shows the situation in which the robot arms are not yet displaced to such an extent that the teat cups are situated straight under the spray nozzles of the rinsing device. When, in the intervals between several milking runs, or after the animals have been milked, the teat cups and the milk lines connected thereto have to be cleaned, then the robot arm including the teat cups is brought to under the spray nozzles and moved upwardly until the spray nozzles engage the opening at the upper side of the teat cups. In this position, the first flow-out openings will be located almost directly below the top edge of a teat cup and the further openings will be situated almost directly thereabove. By subsequently supplying a rinsing fluid via the lines 59, this rinsing fluid, on the one hand, is passed over the upper side of the teat cups, while, on the other hand, rinsing fluid is introduced into the teat cups. During rinsing, by means of a three-way valve which during milking connects the milk lines connected to the teat cups with a central milk tank, the connection between the teat cups and the milk tank will be interrupted and there will be realized a connection with e.g. the rinsing fluid reservoir. In this manner, fluid can be circulated via the supply lines 59 and the spray nozzles, while subsequently, through the teat cups and the milk lines connected thereto, the rinsing fluid will be conveyed to the reservoir.

The robot arm 45 comprises an after-treating device 60, in this case for the purpose of, possibly animal-depending, disinfecting the udder and/or the teats after the animal has been milked. The after-treating device 60 comprises a pressure vessel 61, in which the cleaning-/disinfecting fluid is stored. It will be obvious that, besides a pressure vessel for a cleaning-/disinfecting fluid, in the implement there may also be applied a pressure vessel for a medicinal fluid, which pressure vessel will have the same design and function as the afore-mentioned pressure vessel 61.

According to the present invention in the preferred embodiment, the pressure vessel 61 is designed as a cylindrical metal vessel, at the upper side of which there is connected a line for pressurized air or gas 62, by means of which the pressure vessel can be brought at a certain pressure. The pressurized air or gas line 62 is connected to a further valve 63, by means of which, via the pressure relief line 64, the pressurized air or gas can be removed from the pressure vessel 61. It will be obvious that, upon pressure relief via the pressure relief line 64, the presurized air or gas line 62 will be closed off by means of the further valve 63.

Additionally, on the bottom of the pressure vessel 61 there is connected a discharge line 65 for discharging fluid stored under pressure in said pressure vessel. In the discharge line 65 there is incorporated a filter 66 by means of which particles that may be present in the fluid can be filtered out. Furthermore, to the end of the discharge line 65 there is connected a spray nozzle 67 along which, according to a fixed pattern, the pressurized fluid is atomized. In the discharge line 65, near the spray nozzle 67, there is furthermore incorporated a computer-controlled cock 68.

Furthermore, the pressure vessel 61 is provided with a liquid level meter 69, which, in the preferred embodiment, is designed as a transparent tube 70 disposed at the outside of the pressure vessel 61 and extending substantially along the height of the pressure vessel 61, while, at its lower and upper ends, via lines 71, it is connected with the fluid present in the pressure vessel 61. Additionally, near the lower side of the transparent tube 70 there is provided a liquid level sensor 72 supplying a signal to a (non-shown) computer when the fluid level in the pressure vessel 61 decreases below a fixed, adjustable minimum value.

Near its top side, the pressure vessel 61 is provided with a (non-shown) filling opening capable of being closed off, which filling opening is provided with a valve 73 which, under pressurized air or gas, is operative in the pressure vessel. In the preferred embodiment, the valve 73 is provided with a non-return valve 74. This non-return valve 74 may be made of a rubber disc pivotably attached to a rubber ring, which is disposed around the filling opening of the pressure vessel 61, at the inside thereof, while, in its closed-off position, i.e. when there prevails an overpressure in the pressure vessel, the rubber disc is pushed against the rubber ring.

Additionally, above the valve 73, there is arranged a filling funnel 75, which, at its upper side, is provided with a closing cover 76.

As is shown in Figures 1 and 2, the pressure vessel 61 is attached to the vertical robot arm 36 of the robot arm installation 31, and the spray nozzle 67 is disposed between the two foremost teat cups 53 on the end of the robot arm 45 so as to produce, relative to the latter robot arm, a forwardly and upwardly directed fan-shaped atomizing pattern.

The function of the pressure vessel will be explained in what follows:

When the liquid level has decreased below a fixed minimum level, the liquid level sensor 69 supplies a signal to the computer and the attention of the operating person is drawn to the fact that the pressure vessel 61 has to be replenished. By activating the further valve 63, via the pressure relief line 64 the pressure in the pressure vessel 61 is removed and, as a result, the non-return valve 74 is automatically deactivated. After having removed the cover 76, an operating person can pour fluid into the filling funnel 75, whereafter, under the weight of the fluid, the non-return valve 74 opens and the fluid flows into the pressure vessel 61. Via the transparent tube 71, the operating person can accurately determine to what extent the liquid level in the pressure vessel 61 has raised. When sufficient fluid has been introduced into the pressure vessel 61, the filling funnel 75 is closed off by means of the closing cover 76, so that no contaminations will enter the filling funnel 75. Then, by means of the further valve 63, the pressure vessel 61 is connected to the pressurized air or gas line 62 again, whereafter there is produced an overpressure on the pressure vessel 61. At the same time, as a result of this overpressure, the non-return valve 74 is activated in such a way that the filling opening of the pressure vessel 61 is automatically closed off, so that no fluid can flow out through the filling opening.

The function of the after-treating device 60 will be explained in what follows:

After the milking procedure has ended, the teat cups 53 are removed from the teats and are withdrawn to the robot arm 45. When the computer has decided that the animal has to be treated, the robot arm 45 is positioned in such a way that the fan-shaped spraying pattern of the spray nozzle 67 just touches the back side of the udder of the milked animal. The positioning of the robot arm 45 can be effected by means of the sensor 56 and/or by means of animal-depending coordinates previously inputted into a control computer of the robot arm 45. After the robot arm 45 has been positioned, the valve 68 is opened, while at the same time the robot arm is moved in a horizontal plane in the direction of the front side of the animal. In this manner, the entire udder is sprayed by the fan-shaped spraying pattern. The fan-shaped spraying pattern being directed forwardly and upwardly relative to the end of the robot arm 45, and the spraying of the udder being effected from the rear in the direction of the front of the udder, the spraying fluid is prevented from getting into the teat cups 53. Beforehand, the way to be covered by the robot arm 45 in the horizontal plane, as well as the distance from the spray nozzle 67 to the animal's udder can be inputted, for each individual animal, into a computer by means of which the robot arm 45 is controlled.

## Claims

1. An implement for milking animals, such as cows, said implement comprising a pressure vessel (61) arranged for storing a fluid under pressurized air or gas, which pressure vessel arrangement has:
* a line (62) for pressurized air or gas operable to bring fluid in the pressure vessel (61) to a desired pressure;
* a discharge line (65) for the fluid, in which discharge line (65) there is included a cock (68); and
* a closable filling opening having a valve (73);
* a further valve (63) being incorporated in the pressurized air or gas line (62);
**characterized in that** said further valve (63) is adapted such as to operate in any one of the following modes:
a) permitting pressurized air or gas from said pressurized line (62) to enter the pressure vessel (61); or
b) permitting air or gas present under pressure in said pressure vessel (61) to exit the implement; or
c) discontinuing operations a) and/or b) of the further valve (63);
whereby the valve (73) is adapted to respond by automatically assuming its closed-off position, whenever the air or gas pressure prevailing in the pressure vessel (61) is greater than ambient, thereby closing the filling opening of said pressure vessel (61).

2. An implement as claimed in claim 1, **characterized in that** the implement comprises at least one milking robot (8) for automatically connecting teat cups (54) to the teats of an animal and at least one milking machine for automatically milking the animal.

3. An implement as claimed in claim 1 or 2, **characterized in that** the further valve (63) is disposed at or near the upper side of the pressure vessel (61).

4. An implement as claimed in claim 1, 2 or 3, **characterized in that** the valve (73) operative under pressurized air or gas is a non-return valve.

5. An implement as claimed in claim 4, **characterized in that** the non-return valve (74) includes a rubber disc.

6. An implement as claimed in any one of the preceding claims, **characterized in that** above the valve (73) there is disposed a filling funnel (75) which, at its upper side, is provided with a cover (76).

7. An implement as claimed in any one of the preceding claims, **characterized in that** in the discharge line (65) there is incorporated a filter element (66).

8. An implement as claimed in any one of claims 3 to 6, **characterized in that** the valve (73) is disposed at or near the upper side of the pressure vessel (61).

9. An implement as claimed in any one of the preceding claims, **characterized in that** the pressure vessel (61) is provided with a liquid level meter (69).

10. An implement as claimed in claim 9, **characterized in that** the liquid level meter (69) is designed as a transparent tube (70) disposed at the outside of the pressure vessel (61) and extending substantially along the height thereof, which tube (70), at its upper and lower ends, is in connection with the pressure vessel (61).

11. An implement as claimed in claim 9 or 10, **characterized in that** the liquid level meter (69) is provided with a liquid level sensor (72) supplying a signal when the level of the fluid in the pressure vessel (61) decreases below a fixed adjustable minimum value.

12. An implement as claimed in claim 2 or in any one of the claims 3 to 11 when dependent on claim 2, **characterized in that** the pressurized air or gas line (62) is connected to the pneumatic system of the milking robot (8).

13. An implement as claimed in claim 2 or in any one of the claims 3 to 12 when dependent on claim 2 **characterized in that** the milking robot has a robot arm installation (31), and **in that** pressure vessel (61) is provided on the robot arm installation (31) of the milking robot.

14. An implement as claimed in claim 13, **characterized in that** the robot arm installation (31) is movable in the longitudinal direction of a milking parlour (1).

15. An implement as claimed in any one of the preceding claims, **characterized in that** the cock (68) is a computer-controlled cock.

16. An implement as claimed in any one of the preceding claims, **characterized in that** to the end of the discharge line (65) there is connected a spray nozzle (67).

## Patentansprüche

1. Vorrichtung zum Melken von Tieren, wie z. B. Kühen, wobei die Vorrichtung einen Druckbehälter (61) umfaßt, der zur Lagerung einer mit Druckluft oder Druckgas beaufschlagten Flüssigkeit geeignet ist, wobei die Druckbehälter-Anordnung folgende Teile aufweist:
- eine Leitung (62) für Druckluft oder Druckgas, die derart zu betätigen ist, daß sie in dem Druckbehälter (61) befindliche Flüssigkeit mit einem gewünschten Druck beaufschlagt;
- eine Abflußleitung (65) für die Flüssigkeit, wobei in der Abflußleitung (65) ein Hahn (68) angeordnet ist, und
- eine verschließbare Einfüllöffnung mit einem Ventil (73),
- wobei ein weiteres Ventil (63) in der Druckluft- oder Druckgasleitung (62) angeordnet ist,
**dadurch gekennzeichnet, daß** das weitere Ventil (63) dazu ausgebildet ist, in einem der folgenden Modi zu arbeiten:
a) den Eintritt von Druckluft oder Druckgas aus der Druckleitung (62) in den Druckbehälter (61) zulassen oder
b) den Austritt von in dem Druckbehälter (61) befindlicher Druckluft oder Druckgas aus der Vorrichtung zulassen oder
c) die Tätigkeiten a) und/oder b) des weiteren Ventils (63) beenden,
wobei das Ventil (73) derart ansprechen kann, daß es automatisch seine Schließposition einnimmt, wenn der im Druckbehälter (61) herrschende Luft- oder Gasdruck höher als der Umgebungsdruck ist, und **dadurch** die Einfüllöffnung des Druckbehälters (61) verschließt.

2. Vorrichtung nach Anspruch 1,
**dadurch gekennzeichnet, daß** die Vorrichtung mindestens einen Melkroboter (8) zum automatischen Anschließen von Zitzenbechern (54) an die Zitzen eines Tieres und mindestens eine Melkmaschine zum automatischen Melken des Tieres umfaßt.

3. Vorrichtung nach Anspruch 1 oder 2,
**dadurch gekennzeichnet, daß** das weitere Ventil (63) an oder nahe der Oberseite des Druckbehälters (61) angeordnet ist.

4. Vorrichtung nach Anspruch 1, 2 oder 3,
**dadurch gekennzeichnet, daß** das durch Druckluft oder Druckgas zu betätigende Ventil (73) ein Rückschlagventil ist.

5. Vorrichtung nach Anspruch 4,
**dadurch gekennzeichnet, daß** das Rückschlagventil (74) eine Gummischeibe enthält.

6. Vorrichtung nach einem der vorhergehenden Ansprüche,
**dadurch gekennzeichnet, daß** über dem Ventil (73) ein Einfülltrichter (75) angeordnet ist, der an seiner Oberseite mit einem Deckel (76) versehen ist.

7. Vorrichtung nach einem der vorhergehenden Ansprüche,
**dadurch gekennzeichnet, daß** in der Abflußleitung (65) ein Filterelement (66) angeordnet ist.

8. Vorrichtung nach einem der Ansprüche 3 bis 6,
**dadurch gekennzeichnet, daß** das Ventil (73) an oder nahe der Oberseite des Druckbehälters (61) angeordnet ist.

9. Vorrichtung nach einem der vorhergehenden Ansprüche,
**dadurch gekennzeichnet, daß** der Druckbehälter (61) mit einem Flüssigkeitspegelmesser (69) versehen ist.

10. Vorrichtung nach Anspruch 9,
**dadurch gekennzeichnet, daß** der Flüssigkeitspegelmesser (69) als transparentes Rohr (70) ausgeführt ist, das an der Außenseite des Druckbehälters (61) angeordnet ist und sich im wesentlichen über dessen Höhe erstreckt,
wobei das Rohr (70) an seinem oberen und unteren Ende mit dem Druckbehälter (61) verbunden ist.

11. Vorrichtung nach Anspruch 9 oder 10,
**dadurch gekennzeichnet, daß** der Flüssigkeitspegelmesser (69) mit einem Flüssigkeitspegelsensor (72) versehen ist, der ein Signal liefert, wenn der Pegel der Flüssigkeit in dem Druckbehälter (61) einen festen einstellbaren Minimalwert unterschreitet.

12. Vorrichtung nach Anspruch 2 oder einem der Ansprüche 3 bis 11, soweit auf Anspruch 2 rückbezogen,
**dadurch gekennzeichnet, daß** die Druckluft- oder Druckgasleitung (62) mit dem pneumatischen System des Melkroboters (8) verbunden ist.

13. Vorrichtung nach Anspruch 2 oder einem der Ansprüche 3 bis 12, soweit auf Anspruch 2 rückbezogen,
**dadurch gekennzeichnet, daß** der Melkroboter eine Roboterarm-Vorrichtung (31) aufweist, und daß der Druckbehälter (61) an der Roboterarm-Vorrichtung (31) des Melkroboters angeordnet ist.

14. Vorrichtung nach Anspruch 13,
**dadurch gekennzeichnet, daß** die Roboterarm-Vorrichtung (31) in Längsrichtung eines Melkstandes (1) bewegbar ist.

15. Vorrichtung nach einem der vorhergehenden Ansprüche,
**dadurch gekennzeichnet, daß** der Hahn (68) ein rechnergesteuerter Hahn ist.

16. Vorrichtung nach einem der vorhergehenden Ansprüche,
**dadurch gekennzeichnet, daß** an dem Ende der Abflußleitung (65) eine Sprühdüse (67) angebracht ist.

## Revendications

1. Instrument pour la traite d'animaux, tels que des vaches, ledit instrument comprenant un récipient sous pression (61) agencé pour stocker un fluide sous pression d'air ou de gaz, lequel agencement de récipient sous pression a :
une conduite (62) pour air ou gaz sous pression opérationnelle pour mettre le fluide dans le récipient sous pression (61) à une pression souhaitée ;
une conduite de refoulement (65) pour le fluide, dans laquelle conduite de refoulement (65) il est inclus un robinet (68) ; et
une ouverture de remplissage pouvant être fermée ayant un clapet (73) ;
un autre clapet (63) étant incorporé dans la conduite d'air ou de gaz sous pression (62) ;
**caractérisé en ce que** ledit autre clapet (63) est adapté afin de fonctionner dans l'un quelconque des modes suivants :
a) permettre à l'air ou au gaz sous pression provenant de ladite conduite sous pression (62) d'entrer dans le récipient sous pression (61) ; ou
b) permettre à l'air ou au gaz présent sous pression dans ledit récipient sous pression (61) de sortir de l'instrument ; ou
c) interrompre les opérations a) et/ou b) de l'autre clapet (63) ;
moyennant quoi le clapet (73) est adapté pour répondre en prenant automatiquement sa position fermée, à chaque fois que la pression d'air ou de gaz prévalente dans le récipient sous pression (61) est supérieure à la pression ambiante, fermant ainsi l'ouverture de remplissage dudit récipient sous pression (61).

2. Instrument selon la revendication 1, **caractérisé en ce que** l'instrument comprend au moins un robot de traite (8) pour relier automatiquement les gobelets trayeurs (54) aux trayons d'un animal et au moins une machine de traite pour la traite automatique de l'animal.

3. Instrument selon la revendication 1 ou 2, **caractérisé en ce que** l'autre clapet (63) est disposé au niveau de ou près du côté supérieur du récipient sous pression (61).

4. Instrument selon la revendication 1, 2 ou 3, **caractérisé en ce que** le clapet (73) opérationnel sous air ou gaz sous pression est un clapet anti-retour.

5. Instrument selon la revendication 4, **caractérisé en ce que** le clapet anti-retour (74) comprend un disque de caoutchouc.

6. Instrument selon l'une quelconque des revendications précédentes, **caractérisé en ce qu'**au-dessus du clapet (73) il est disposé un entonnoir de remplissage (75) qui, au niveau de son côté supérieur, est pourvu d'un couvercle (76).

7. Instrument selon l'une quelconque des revendications précédentes, **caractérisé en ce que** dans la conduite de refoulement (65) il est incorporé un élément filtrant (66).

8. Instrument selon l'une quelconque des revendications 3 à 6, **caractérisé en ce que** le clapet (73) est disposé au niveau de ou près du côté supérieur du récipient sous pression (61).

9. Instrument selon l'une quelconque des revendications précédentes, **caractérisé en ce que** le récipient sous pression (61) est pourvu d'un dispositif de mesure de niveau de liquide (69).

10. Instrument selon la revendication 9, **caractérisé en ce que** le dispositif de mesure de niveau de liquide (69) est conçu en tant que tube transparent (70) disposé à l'extérieur du récipient sous pression (61) et s'étendant sensiblement le long de la hauteur de celui-ci, lequel tube (70), au niveau de ses extrémités supérieure et inférieure, est raccordé au récipient sous pression (61).

11. Instrument selon la revendication 9 ou 10, **caractérisé en ce que** le dispositif de mesure de niveau de liquide (69) est pourvu d'un capteur de niveau de liquide (72) fournissant un signal lorsque le niveau du fluide dans le récipient sous pression (61) diminue en dessous d'une valeur minimum ajustable fixe.

12. Instrument selon la revendication 2 ou selon l'une quelconque des revendications 3 à 11 lorsqu'elle dépend de la revendication 2, **caractérisé en ce que** la conduite d'air ou de gaz sous pression (62) est raccordée au système pneumatique du robot de traite (8).

13. Instrument selon la revendication 2 ou selon l'une quelconque des revendications 3 à 12 lorsqu'elle dépend de la revendication 2, **caractérisé en ce que** le robot de traite a une installation de bras robotisé (31), et **en ce que** le récipient sous pression (61) est prévu sur l'installation de bras robotisé (31) du robot de traite.

14. Instrument selon la revendication 13, **caractérisé en ce que** l'installation de bras robotisé (31) est mobile dans la direction longitudinale d'une salle de traite (1).

15. Instrument selon l'une quelconque des revendications précédentes, **caractérisé en ce que** le robinet (68) est un robinet commandé par ordinateur.

16. Instrument selon l'une quelconque des revendications précédentes, **caractérisé en ce qu'**à l'extrémité de la conduite de refoulement (65) il est raccordé une buse de pulvérisation (67).
